# EUROPEAN PATENT SPECIFICATION

(11) **EP 3 585 302 B1**
(45) Date of publication and mention of the grant of the patent: **12.07.2023**
(21) Application number: 18712644.6
(22) Date of filing: 22.02.2018
(51) Int. Cl.: A61C 15/04, A46B 5/00, A46B 5/04, A61C 15/02, A46B 15/00

(54) **TOOL FOR CLEANING A CORRESPONDING PART OF THE ORAL CAVITY OF A PERSON, IN PARTICULAR FOR CLEANING TEETH**
WERKZEUG ZUM REINIGEN EINES ENTSPRECHENDEN TEILS DER MUNDHÖHLE EINER PERSON, INSBESONDERE ZUR ZAHNREINIGUNG
OUTIL POUR LE NETTOYAGE D'UNE PARTIE CORRESPONDANTE DE LA CAVITÉ BUCCALE D'UNE PERSONNE, EN PARTICULIER POUR LE NETTOYAGE DES DENTS

(30) Priority: 24.02.2017 IT 201700021266 U
(43) Date of publication of application: 01.01.2020
(73) Proprietor: Battaglia, Alessio, 40138 Bologna (IT)
(72) Inventor: Battaglia, Alessio, 40138 Bologna (IT)
(74) Representative: Fanzini, Valeriano
(86) International application number: PCT/IB2018/051105
(87) International publication number: WO 2018/154478

(56) References cited:
- CN-U- 202 760 492
- DE-B- 1 101 693
- DE-B- 1 101 693
- GB-A- 190 315 598
- US-A- 4 651 760
- US-A- 4 651 760
- US-A- 5 306 151
- US-A- 5 881 745
- US-A- 5 881 745
- US-A1- 2016 354 187
- US-A1- 2016 354 187

## Description

### Technical field

The present invention relates to tool for cleaning a corresponding part of the oral cavity of a person, in particular for cleaning teeth, preferably of a person.

### Background art

There are known tools for cleaning a corresponding part of the oral cavity of a person, in particular for cleaning of the teeth, preferably of a person, comprising a supporting body or handle for means, or member, for engaging and cleaning, of the corresponding part of the oral cavity of the person, the engaging and cleaning means extending from the supporting body and being in the form of a dental brush, or in the form of rubber picks or toothpicks, or in the form of a corresponding dental floss.

The dental brush and the dental floss pick are a tool for oral hygiene studied to obtain accurate cleaning between one tooth and the next by removing plaque deposits from the interdental spaces where the toothbrush normally can't reach.

It is known that dental brushes currently in use consist of a handle whose end is connected to a head by a connecting portion generally composed of a core or metal wire, which may also be covered by rubber to protect the tissues. The head is equipped with a plurality of bristles, often wound with the form of spiral, and/or radial arrangement, about the metal core that comes out of one of the ends of the handle, and whose diameter of the spiral varies depending on the type of use and/or the type of spaces to be cleaned. In known dental brushes, head, connecting body or metal core, and handle are positioned along the straight line and, therefore, the bristles are perpendicular to the mentioned line. Such straight line also is the axis along which the dental brush is to be put into movement during the step of cleaning the teeth or the interdental spaces. In this way, an area of action of the bristles can be defined which is that with which the ends of the bristles clean, by means of a mechanical action of rubbing, or friction, on the dental surfaces, along the above-mentioned axis. Moreover, dental brushes ordinarily are divided into those with a long handle and those with a short handle, the latter currently being the most manufactured and used. On the whole, regardless of the length, the shape of the handle both of dental brushes with a long handle and those with a short handle overlook the needs that the tool must and/or may have at rest, that is to say, when it is not being used, such as for example, a good, adequate and convenient resting position on a counter.

In fact, after use, the dental brushes are mainly placed inside the glass which usually also contains the toothbrushes, or on the counter or shelf of the bathroom usually situated at the base of the mirror located above the wash basin. More specifically, taking hold of the dental brush tool with a short handle is particularly difficult for the user when located inside the cup since the walls of the glass make it difficult to grip.

Generally speaking, when the common dental brushes, that is to say, all those without a base, that is to say, a portion with a supporting function, are located on a counter, they have a limited stability since a shape without the base does not allow a precise resting position, or stable positioning, on a surface.

This means that disadvantageously the common dental brushes are subject to accidental falling from rolling.

Moreover, the absence of a part, or portion, designed for the purpose of providing a base forces the user to position the dental brush on a side. This arrangement, or placing mode, is inadequate since it leads to a contact, which for the use of the tool can be defined as unhygienic, between the surface of the shelf (or counter) and the lateral surface of the dental brush, and therefore for those models that do not have the bristle cap or for the person who does not use the bristle cap, even if there is one - also that of the bristles. In essence, this arrangement on the surface decreases both the degree of hygiene of the dental brush tool and that of the surface of the shelf. More specifically, the bacterial and/or food residues of the first will remain on the surface of the shelf, whilst dirt and/or dust residues which can be found on the second will inevitably contaminate the dental brush.

Dental brushes and/or dental floss picks are already known which have a handle whose shape, size, and composition of the material vary depending on the manufacturer that produces them, but whose nature and shape do not allow a stable resting on a counter, even though the operating part or object is similar to all the dental brushes available on the market, that is to say, the bristles and their arrangement about the connecting core to which they are usually attached.

In any case, the protective cap causes a considerable delay in the drying of the bristles and creates the ideal environment for the development of microbial species. It is unanimously recommended by professionals in the trade that the best method for not creating bacterial proliferation is to keep the head uncovered.

Like dental brushes, also dental floss picks are tools designed to remove the bacterial plaque present between one tooth and the next. Created to facilitate the use of the floss commonly sold on spools, there are the disposable type (completely disposable) and the non-disposable type, on which a piece dental floss is placed and removed after use, or is provided in the form of spool inside the handle. The handle of the pick remains on these, where the disposable part only consists of the floss (refill). Although less efficient, the disposable picks are the most common and regardless of the brand, are often indistinguishable. Consisting of a handle and a final arc positioned in line on the same axis, they differ from the non-disposable ones instead made with the line of the floss positioned at right angles to the handle (shape of a 'Y', ergonomically more effective). These comprise: picks with a method for loading by securing a portion of floss (taken from the traditional spool) at the two ends of the arc, and picks with the spool positioned directly inside the handle where, being able to slide with each use, the floss is replaced in the specific seat of the arms and the arc. However, both the prior art solutions are disadvantageous since in the first case, they require performing excessive and annoying operations for the user to secure the dental floss to the tool and in the second case, they are excessively complex and expensive to make.

US2016354187 shows a dental interproximal cleaning tool, with a handle and a stack of cartridges with cleaning tips stored inside the handle. The cartridges have a tubular shape and are stackable on top of each other.

US4651760 shows a toothpick with a portion of its body having "V" shaped cross section and a large projecting gripping part on its lower end.

### Aim of the invention

This invention therefore proposes a new solution as an alternative to the solutions known up to now and, more specifically, proposes to overcome one or more of the above mentioned drawbacks and/or problems and/or to meet one or more of the needs felt in the trade or inferable from the above.

Object of the present invention:
A tool (10) for cleaning a corresponding part of the oral cavity of a person, in particular for cleaning teeth, of a person, comprising means (14), or member, for engaging and cleaning the corresponding part of the oral cavity of the person, and
supporting means (12) for supporting said means (14), or member, for engaging and cleaning the corresponding part of the oral cavity of the person, which supporting means (12) define, or comprise, a respective portion which defines the handle of the tool;said engaging and cleaning means (14) extending from the supporting means (12) and in particular, being in the form of a corresponding brush, preferably a dental brush (14) or in the form of a pick or toothpick, or in the form of corresponding dental floss;
the supporting means (12) is in the form of a longitudinally elongate body which extends between a first end (12') upper in the rest condition, and from which the engaging and cleaning means (14) extend, and a second end (12") lower in the rest condition,
the elongate body (12) having a large longitudinal face facing frontally (12i), a large longitudinal face facing posteriorly (12e) and opposite longitudinal lateral edges (12a, 12b) for connecting the face facing frontally (12i) and the face facing posteriorly (12e) of the elongate body (12), wherein said elongated body has a curved cross section in the general shape of a U
providing a transversal end surface (16') of the supporting means (12) in the form of a flat surface in the general curved shape of a 'U', and designed to form a corresponding lower rest for the tool (10) that defines corresponding resting means and means for keeping the tool in an upright condition relative to a corresponding, supporting flat surface, and
said cross section tapers away from the second end (12") and converges towards the first end (12')
wherein said body (12) has a respective thickness which extends between said large longitudinal face facing frontally (12i) which is an inner recessed surface (12i) and said large longitudinal face facing posteriorly (12e) which is an outer protruding surface (12e), such that the inner recessed surface (12i) is designed to overlap,
in particular at least partly, the outer protruding surface (12e) of the supporting means (12) of at least one similar cleaning tool (10) so as to form means for mutual stacking by lateral superposing, with the supporting means (12) of similar cleaning tools (10)
and wherein the free end portion (16) of the elongated body is shaped to form gripping means for the fingers of the user to perform the cleaning of the corresponding part of the oral cavity
which gripping means are formed of a peripheral gripping surface (12i, 12e) of the large longitudinal face facing frontally and posteriorly (12i, 12e) for at least two, and preferably for three, fingers of the user.
In this way, it is possible to make a tool which can be easily gripped and in particular, have advantageously reduced dimensions, and it is also possible to package a predetermined quantity of tools in a respective package without wasting space.

According to a further aspect, the tool may comprise means for engageable and disengageable securing of dental floss on the supporting means, or body, of the tool, in operating condition, especially mounted on the arms of the fork of the tool; and in that the dental floss to be applied on the supporting means, or body, of the tool, is in the form of a closed-loop dental floss, preferably made of non-elastically extensible material.

In this way, the application of the dental floss on the tool and/or the removal of it from the tool are greatly facilitated.

### Brief description of the drawings

This and other innovative aspects, or specific advantageous embodiments, are set out in the appended claims and its technical features are apparent from the detailed description which follows of preferred, advantageous embodiments which must, however, be considered purely as a non-limiting example of the invention; the description being made with reference to the accompanying drawings, in which:
- Figure 1A is a perspective view of a preferred embodiment of the tool according to the present invention;
- Figure 1B is a front view of the preferred embodiment of the tool according to the present invention;
- Figure 2 is a side view of the preferred embodiment of the tool according to the present invention;
- Figure 3 is a perspective view of the lower side of the preferred embodiment of the tool according to the present invention;
- Figure 4 is a perspective view of the upper side of the preferred embodiment of the tool according to the present invention;
- Figure 5A is a perspective view of the preferred embodiment of the tool according to the present invention, in a superposed condition on other tools;
- Figure 5B is a side view of the preferred embodiment of the tool according to the present invention, in a superposed condition on other tools;
- Figure 5C is a plan view from the lower side of the preferred embodiment of the tool according to the present invention;
- Figure 6 is a perspective view of a second preferred embodiment of the tool according to the present invention;
- Figure 7 is a front view of the second preferred embodiment of the tool according to the present invention;
- Figure 8 is a side view of the second preferred embodiment of the tool according to the present invention;
- Figure 9 is a rear view of the second preferred embodiment of the tool according to the present invention;
- Figure 10 is a bottom perspective view of the second preferred embodiment of the tool according to the present invention;
- Figure 11 is a top perspective view of the second preferred embodiment of the tool according to the present invention;
- Figure 12A is a perspective view of the second preferred embodiment of the tool according to the present invention, in a superposed condition on other similar tools;
- Figure 12B is a plan view from the bottom side of the second preferred embodiment of the tool according to the present invention;
- Figure 13 is a side view of a third preferred embodiment of the tool which is not part of the present invention;
- Figure 14A is a top view of the third preferred embodiment of the tool according to the present invention;
- Figure 14B is a plan view from the lower side of the third preferred embodiment of the tool according to the present invention;
- Figure 15 is a side view of a fourth preferred embodiment of the tool which is partially included in the present invention;
- Figure 16A is a perspective view of the fourth preferred embodiment of the tool;
- Figure 16B is a front view of the fourth preferred embodiment of the tool;
- Figure 16C is a plan view from the lower side of the fourth preferred embodiment of the tool;
- Figure 17 is a perspective view of the fourth preferred embodiment of the tool, in a superposed condition on other similar tools;
- Figure 18A is a side view of a fifth preferred embodiment of the tool which is not part of the present invention;
- Figure 18B is a top perspective view of the fifth preferred embodiment of the tool;
- Figure 19A is a side view of a variant of the fifth preferred embodiment of the tool;
- Figure 19B is a side view of a variant of the fifth preferred embodiment of the tool;
- Figure 19C is a side view of a variant of the fifth preferred embodiment of the tool;
- Figure 19D is a plan view from the lower side of the fifth preferred embodiment of the tool;
- Figure 20 is a side perspective view of a sixth preferred embodiment of the tool which is not part of the present invention;
- Figure 21 is a view from the lower side of a sixth preferred embodiment of the tool;
- Figure 22 is a plan view from the lower side of the sixth preferred embodiment of the tool;
- Figure 23A is a perspective view of a seventh preferred embodiment of the tool according to the present invention;
- Figure 23B is a side view, partly in cross-section, of the seventh preferred embodiment of the tool according to the present invention;
- Figure 23C is an elevated rear view of the seventh preferred embodiment of the tool according to the present invention;
- Figures 23D, 23E and 23F are perspective views of the different steps of application of the dental floss to the seventh preferred embodiment of the tool according to the present invention;
- Figures 24A, 24B, 24C and 24D are perspective views of the application of dental flosses of different perimeter extension, or length, to the seventh preferred embodiment of the tool according to the present invention;
- Figures 26A and 26B are respective perspective rear and front views of an eighth preferred embodiment of the tool according to the present invention;
- Figures 27A and 27B are respective side and perspective views of a ninth preferred embodiment of the tool which is not part of the present invention;
- Figures 28A and 28B are respective side and perspective views of a tenth preferred embodiment of the tool which is not part of the present invention;
- Figures 29A and 29B are respective side and perspective views of an eleventh preferred embodiment of the tool which is not part of the present invention;
- Figures 30A and 30B are respective perspective views of the methods of use of a dental floss;
- Figure 31 is a respective plan view of the dental floss.

### Detailed description of preferred embodiments of the invention

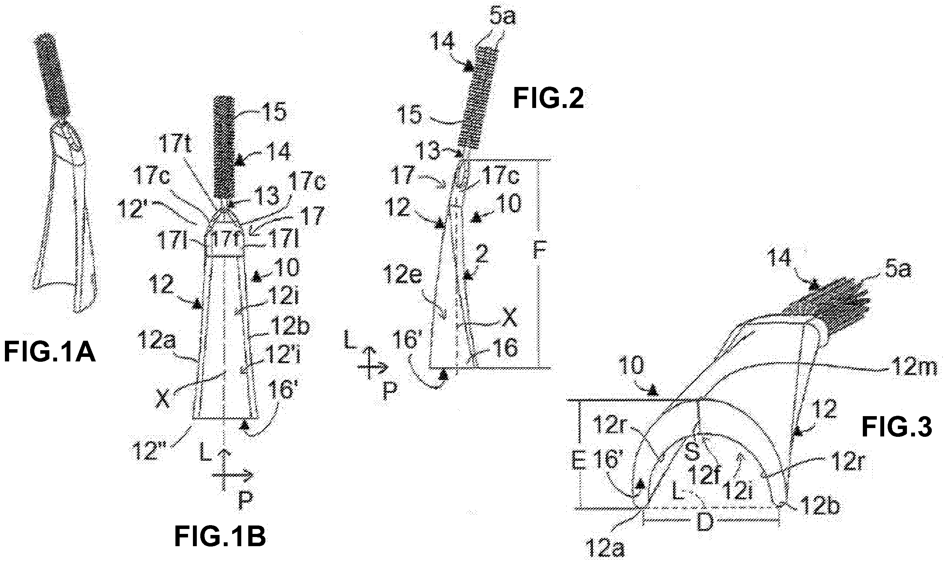

Accompanying Figures 1A to 5C illustrate a first preferred embodiment 10 of the tool for cleaning a corresponding part of the oral cavity of a person, in particular for cleaning teeth, preferably of a person; comprising supporting means 12, or handle, for means 14, or member, for engaging and cleaning the corresponding part of the oral cavity of the person, the engaging and cleaning means 14 extending from the supporting means 12, or handle, and in particular being in the form of a corresponding brush, preferably of a dental brush 14.

As illustrated, the supporting means form a handle of the tool 12.

According to different embodiments, the means, or member, for engaging and cleaning may also be in the form of a pick or toothpicks, that is to say, as illustrated below, in the form of dental floss, as described in more detail below.

Advantageously, the supporting means 12, or handle, have a free end portion 16 which is shaped to form gripping means for the fingers of the user, in particular to perform the cleaning of the corresponding part of the oral cavity.

In this way, it is possible to make a tool which can be easily gripped and in particular, have advantageously reduced dimensions.

According to the invention, the supporting means 12, or handle, have a free end portion 16 which is shaped such as to define, in the rest condition or non-operating condition of the tool, resting means and means for keeping the tool in an upright, or substantially upright, condition relative to a corresponding, preferably flat, supporting surface.

In this way, it is possible to keep the tool, when not used, in an appropriate position and to prevent the cleaning element from coming in contact with undesired surfaces and therefore running the risk of getting dirty or being contaminated, and also of preventing possible rolling, or falls, of the tool relative to the resting surface, that is to say, facilitating the drying of the cleaning means 14, or member.

Moreover, in the invention, the supporting means 12, or handle, have a respective peripheral longitudinal surface 12i, 12e, which is shaped in such away as to form means for mutual stacking, or lateral superposing, with the supporting means 12, or handle, of similar cleaning tools 10.

In this way, it is possible to package a predetermined quantity of tools in a respective package without wasting space.

As illustrated, the supporting means 12, or handle, are in the form of a longitudinally elongate body, in particular according to a respective longitudinal axis X, which extends between a first end 12', in particular upper in the rest condition, and preferably from which the engaging and cleaning means 14 extend, and a second end 12", in particular lower in the rest condition, which is designed to rest on a corresponding supporting surface. In particular, the elongate body 12 has a large longitudinal face facing frontally 12i, a large longitudinal face facing posteriorly 12e and opposite longitudinal lateral edges 12a, 12b, in particular for connecting the face facing frontally 12i and the face facing posteriorly 12e of the elongate body 12.

As illustrated, the supporting means 12, or handle, are in the form of a body which has a respective thickness and which extends between an inner recessed surface 12i and an outer protruding surface 12e, in particular such that the inner surface 12i is designed to overlap, in particular at least partly, the outer surface of the supporting means 12, or handle, of at least one similar cleaning tool 10.

According to the invention, the body defining the supporting means 12, or handle, has a curved cross section in the general shape of a 'U'.

Advantageously, as illustrated, the supporting means 12, or handle, have a cross section such that starting from a middle, or solid, zone 12m thereof, they extend diverging towards corresponding opposite lateral edges 12a, 12b.

As may be inferred from Figure 3, the opposite lateral edges 12a and 12b advantageously have between each other, at, or level with, this transversal end, or free, surface 16', a distance `D', which may vary from 6 mm to 35 mm, preferably from 10 mm to 24 mm, and optimally, may be substantially around 15 to 17 mm.

Advantageously, as may be inferred from Figure 3, the distance 'E' between the middle zone 12m, or solid point, and the joining line 'L' between the opposite lateral edges 12a and 12b may vary from 6 mm to 35 mm, preferably from 10 mm to 24 mm, and optimally, may be substantially around 16 to 19 mm.

Advantageously, as illustrated, the supporting means 12, or handle, have a cross section which tapers away from the free end 12", in particular its lower resting end, that is to say, in particular which converges towards the supporting end 12' for the engaging and cleaning means 14. Advantageously, the elongate body 12 defining the supporting means 12, or handle, has a cross section such as to define a respective thickness S, in particular a variable thickness S, preferably in an increasing manner, starting from the lateral edges 12a, 12b towards the middle zone 12m of the elongate body 12.

As mentioned, the end portion 16 of the supporting means 12, or handle, has a corresponding transversal end surface 16' which defines resting means of the tool on a corresponding supporting surface.

More specifically, as illustrated, the transversal end surface 16' of the supporting means 12, or handle, is in the form of a surface which as a whole is flat and in particular, which is designed to form a corresponding lower rest for the tool.

According to the invention, as illustrated, the transversal end face 16' of the gripping means 12 or handle extends transverse with a curved profile, in the general shape of a 'U'.

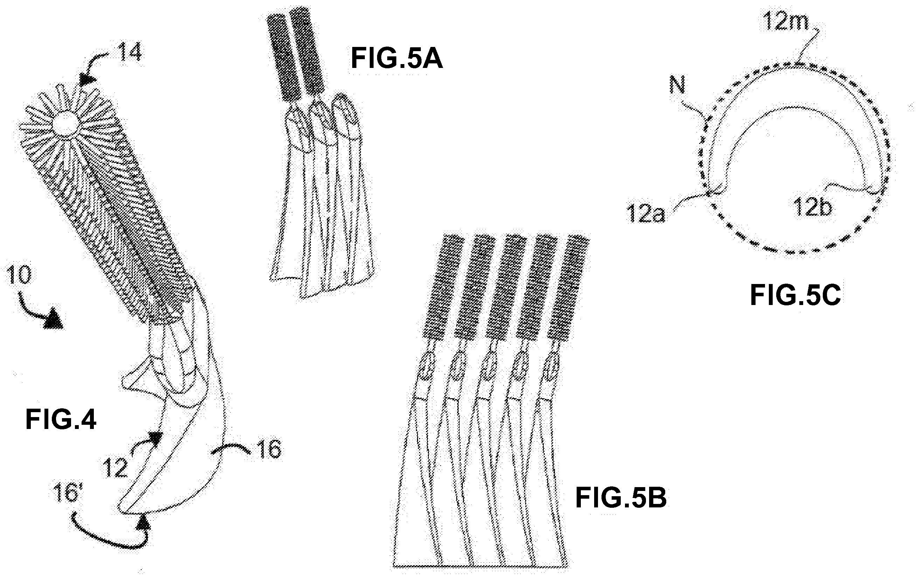

In other terms, the end, or lower, resting surface 16' of the tool is incorporated in a circle, denoted by the reference character 'N' (FIG. 5C), whose diameter preferably ranges from a minimum of 6 mm to a maximum of 35 mm. In this range of measurements, a tool is obtained which, carrying a weighty cleaning member, for example like the one of the current conventional cleaning members, is sufficiently stable in the respective upright and resting position on the underlying resting surface, and at the same time is such as to have a limited size and is advantageous for the user or for the environments in which the tool is housed.

In the present invention, the resting surface extends according to an open-line profile. However, according to different embodiments, not part of the invention, the resting base could also be in the form of a closed polygon with straight or curved sides, or if necessary, be circular in shape. According to a further embodiment, the resting base could also be composed of a plurality of separate points defining a resting surface of the tool as a whole.

Advantageously, the free end portion 16 of the supporting means 12, or handle, forms housing means, that is comprising at least one respective seat 12'i for gripping by the user.

The housing means, in the form of a respective seat 12i, have a recessed shape, which is open on one side, and which more specifically is defined by a resting bottom 12f of the finger of the user, from which corresponding lateral protrusions 12r, 12r, or extensions, extend and in particular which is shaped so as to be suitable for gripping by the fingers of the user.

The housing means 12i, in particular in the form of a respective seat 12i, extend longitudinally along the free end portion 16, that is to say, along the supporting means 12, or handle.

The free end portion 16, in particular the housing means 12i, are designed to house, or to receive engaged, the corresponding fingers of the user.

As illustrated, the free end portion 16 of the supporting means 12, or handle, has a surface which protrudes outwardly, or face 12e directed posteriorly which is curved.

As illustrated, the free portion 16 of the supporting means 12, or handle, has an inner surface 12i or surface facing frontally, which has a curved conformation.

The free end portion 16 of the supporting means 12, or handle, forms a peripheral gripping surface 12i, 12e for the fingers of the user.

More specifically, as illustrated, the supporting means 12, or handle, have a respective end portion 17 from which the engaging and cleaning means of the corresponding part of the oral cavity of the person extend.

More specifically, as illustrated, the end portion 17 from which the engaging and cleaning means of the corresponding part of the oral cavity extend is an end opposite to the free end portion 16.

Advantageously, the distance 'F' between the free end portion 17 and the end, or lower, surface 16' may vary from 20 mm to 90 mm, preferably from 30 mm to 70 mm, and optimally, may be around 40 to 45 mm. Advantageously, the end portion 17 defines means for supporting the engaging and cleaning means 14.

More specifically, as illustrated, a shaft 13 for supporting the engaging and cleaning means 14 extends from the transversal end face of the end portion 17.

More specifically, as illustrated, the brush, in particular the dental brush, has cleaning bristles 15, in particular which are circumferentially and/or longitudinally distributed, relative to the respective supporting shaft 13.

As illustrated, the supporting shaft 13 extends inside the end portion 17 and, preferably, in part of the supporting means 12, or handle. Preferably, as illustrated, the engaging and cleaning means 14 extend inclined, in particular frontally, by a respective angle relative to the longitudinal axis X of the supporting means 12, or handle, or to the vertical axis X of the tool in an upright position.

More specifically, the end portion 17 which carries the engaging and cleaning means 14 extends inclined, in particular frontally, by an angle, especially relative to the longitudinal axis X of the supporting means 12, or handle, or to the vertical axis X of the tool in an upright position. Advantageously, the engaging and cleaning means 14 and/or the end portion 17 which carries the engaging and cleaning means 14 are/is inclined towards the front part of the supporting means 12, or handle. More specifically, as illustrated, the end portion 17 has an end part with lateral walls 17c, 17c converging towards the end transversal face 17t or wall, from which the engaging and cleaning means 14 extend and from which substantially rectilinear respective side walls 17l, 17l extend, towards the opposite end of the handle.

More specifically, the end portion 17 has a bottom or rear wall 17f, preferably which is substantially flat.

Advantageously, the flat bottom or rear wall 17f is designed for a grip, particularly close to the engaging and cleaning means 14, of thumb and forefinger, so that there is more working precision of the user when necessary.

According to a further embodiment not illustrated in the accompanying drawings, it could also be hypothesized for the portion 17f relative to the supporting handle portion 12 to be foldable by the user, thus adopting any desired inclination for the user.

More specifically, as illustrated, the converging lateral walls 17c, 17c of the end portion 17 have an outwardly rounded or substantially rounded profile.

Preferably, the height or length of the supporting means 12, or handle, is more than twice the length of the engaging and cleaning means 14.

Preferably, the length of the engaging and cleaning means 14 and of the respective end portion 17 which supports them, is slightly less than the height or length of the main non-inclined portion of the supporting means 12, or handle.

Advantageously, the end of the engaging and cleaning means 14 extends frontally just beyond the front end of the resting surface 16' of the supporting means 12, or handle.

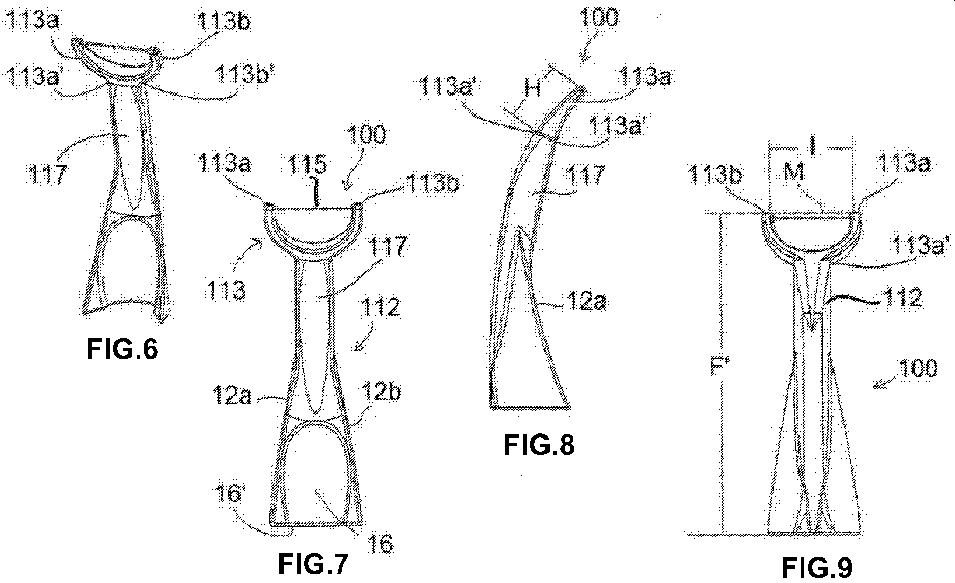

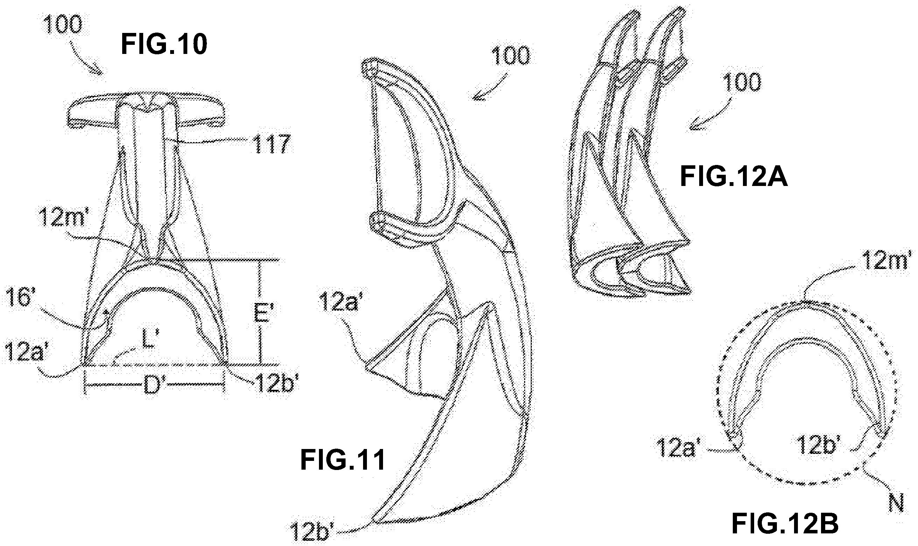

Figures 6 to 12 below illustrate a further or second preferred embodiment of the tool, having similar, or equivalent, components to those of the preferred embodiment, and which are denoted by the same reference labels and which, to avoid making this description too lengthy, are not described again in detail.

In this second preferred embodiment, as may be inferred from the figures, the supporting means comprise a respective portion 112, defining the handle of the tool, and a fork 113 which directly supports dental floss 115, as in any case will become clearer as this description continues.

Advantageously, in conformity with the second preferred embodiment of the tool, the supporting means 112, or handle, have an end portion 117, in particular for supporting the engaging and cleaning means 115, that is to say, for the fork 113 for directly sustaining the engaging and cleaning means 115.

In the present invention, the portion, or body, defining the supporting means 112, or handle, has a curved cross section in the general shape of a 'U'.

Advantageously, the supporting means 112, or handle, have a cross section such that it extends from a middle, or solid, zone 12m' thereof, diverging towards corresponding opposite lateral edges 12a', 12b'.

As a whole, the opposite lateral edges 12a' and 12b' advantageously have at, or level with, this transversal end, or free, surface 16', a distance D', which may vary from 6 mm to 35 mm, preferably from 10 mm to 24 mm, and optimally, from 15 mm to 17 mm.

Advantageously, the distance E' between the middle zone 12m', or solid point, and the joining line L' of the opposite lateral edges 12a' and 12b' may vary from 6 mm to 35 mm, preferably from 10 mm to 24 mm, and optimally, from 16 mm to 19 mm.

Advantageously, in conformity with the second preferred embodiment, the supporting means comprise fork means 113 for supporting dental floss 115.

As illustrated, the fork means 113 extend from a respective end point, respectively 113a' and 113b', of the end supporting portion 117.

Advantageously, in conformity with the second preferred embodiment, the fork means 113 for supporting dental floss 115 have the dental floss oriented towards the front with respect to the supporting means 112, or handle. However, according to different embodiments, the dental floss could also be oriented inclined in general by any angle, or in particular also at a right angle, relative to the plane of transversal extension (front) of the resting base.

Advantageously, in conformity with the second preferred embodiment, the fork means 113 for supporting dental floss 115 position the dental floss protruding, in particular frontally, in addition to the supporting means 112, or handle, that is to say, projecting beyond the base surface 16' of the supporting means 112, or handle.

In this way, the use of the dental floss is particularly facilitated.

However according to different embodiments, the dental floss could also be vertically aligned relative to the plane of transversal extension of the resting base.

Advantageously, in conformity with the second preferred embodiment, the fork means 113 for supporting dental floss 115 have a first and a second arm 113a, 113b for supporting the ends of the dental floss 115, which protrude laterally relative to the end supporting portion 117, which support arms 113a, 113b in particular are spaced apart from each other at the respective supporting ends of the dental floss 115, that is to say, they extend in width by a stretch which substantially corresponds to the width of the supporting means 112, or handle, at the respective resting surface 16', or base.

The distance "I" between the support arms 113a and 113b, at the respective supporting ends of the dental floss 115, may vary from 10 mm to 27 mm, preferably from 13 mm to 24 mm, and optimally, from 16 mm to 20 mm.

In turn, as illustrated in Figure 8, the perpendicular distance H between lower end points 113a' and 113b' of the respective support arms 113a and 113b and the respective free ends of these arms 113a, 113b, that is to say, the points at the respective supporting ends of the dental floss 115, may vary from 10 mm to 30 mm, preferably from 15 mm to 25 mm, and optimally, from 17 mm to 22 mm.

As a whole, advantageously, the distance F' between the plane defined by the joining line M of the end point of the support arms 113a, 113b, and the end, or lower, surface 16', may vary from 20 mm to 100 mm, and preferably from 30 mm to 70 mm, and optimally, from 40 mm to 50 mm.

Advantageously, in conformity with the second preferred embodiment, the end portion 117 which carries the engaging and cleaning means, or dental floss 115, extends inclined, in particular frontally, with corresponding curved profile.

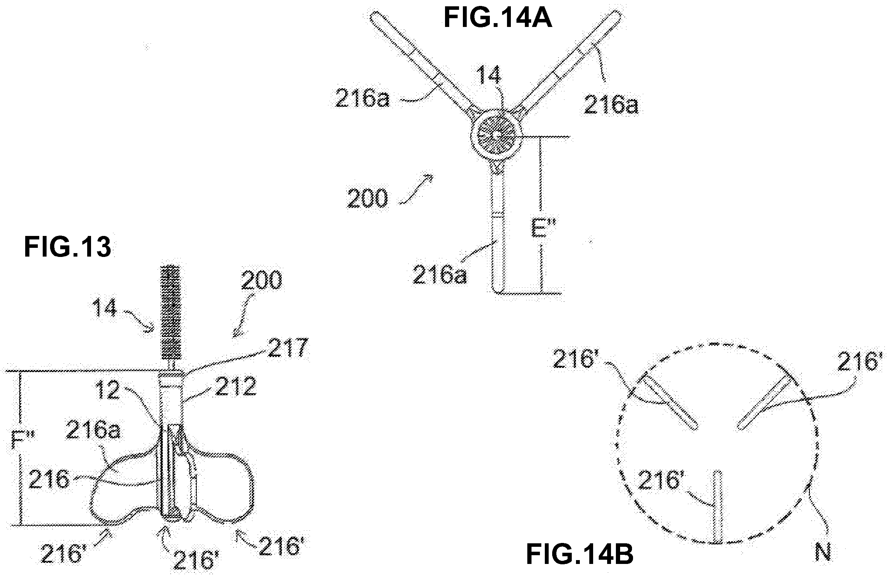

According to a third preferred embodiment of the tool 200 which is not part of the present invention, illustrated in Figures 13 to 14B below, relative to the main body 12, or the supporting means 212, or handle, the transversal end surface 216' is defined by a plurality of separate faces spaced from one another, in particular of corresponding parts of the lower portion 216 of the supporting means, or handle, especially defined by corresponding flaps 216a which extend transverse relative to a corresponding central body 212 for supporting engaging and cleaning means 14.

As illustrated, the flaps are angularly spaced from one another by a corresponding angle of between 90° and 150°, and in any case preferably by an angle equal to 120°.

As a whole, the distance E" between the midpoint of the central body 212 and the end point of the flaps 216a advantageously may vary from 5 mm to 40 mm, preferably from 10 mm to 25 mm, and optimally, may be around 15 mm.

More specifically, as illustrated, the supporting means 212, or handle, have a respective end portion 217, from which the engaging and cleaning means 14 of the corresponding part of the oral cavity of the person extend. More specifically, as illustrated, the end portion 217 is at the end of the lower end, or free, portion 216 of the supporting means.

Advantageously, the distance F" between the limit of the end portion 217, and the end, or lower, surface 216' of the supporting means may vary from 20 mm to 80 mm, preferably from 25 mm to 50 mm, and optimally, from 30 mm to 40 mm.

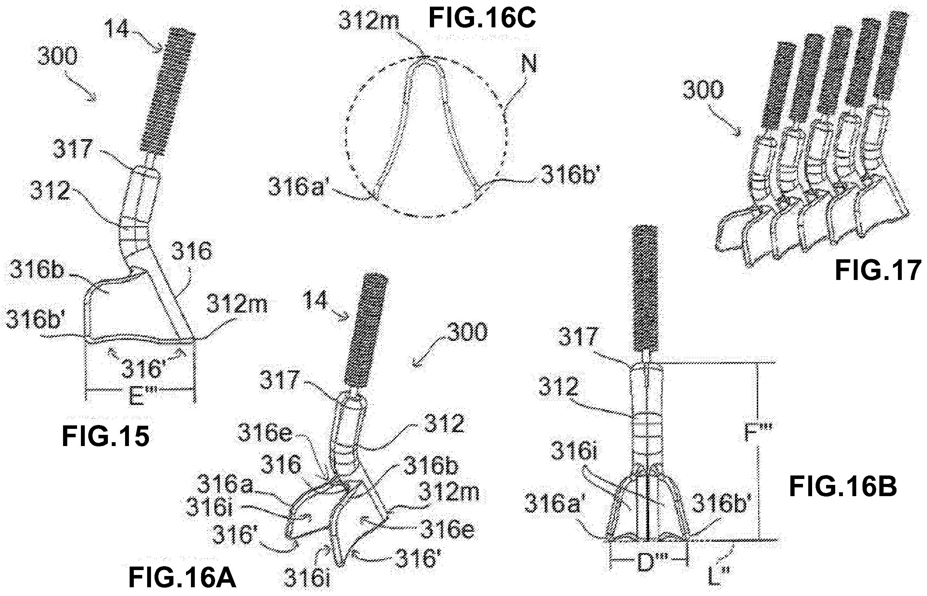

Figures 15 to 17 illustrate a fourth preferred embodiment of the tool 300, which has components that are similar or equivalent to those of the preceding preferred embodiments, which are labelled with the same reference numerals as those used for the preceding preferred embodiments and are not described again in detail so as to avoid making this description too lengthy.

Advantageously, in conformity with the fourth preferred embodiment of the tool 300, which is partially covered by the present invention, the supporting body or handle comprises a lower resting portion and an upper coupling portion of the engaging and cleaning member.

More specifically, the lower portion of the supporting body comprises a first and a second flaps 316a, 316b which, as illustrated, diverge from each other and which also define at least part of the end, or lower, resting surface 316'.

More specifically, as illustrated, the flaps 316a, 316 diverge from a supporting rod-shaped element 316.

The upper portion of the supporting body 312 in turn is in the form of a respective rod-shaped element 317, which acts as a support for the engaging and cleaning means 14.

The upper rod-shaped element 317 extends from the lower rod-shaped element 316, or portion, and extends along a respective angle relative to the lower portion 316.

More specifically, the lower rod-shaped element 316, or portion, extends inclined towards the front zone of the tool, whilst the upper rod-shaped element 317, or portion, in turn extends inclined towards the rear zone of the tool, thereby forming as a whole, with the lower rod-shaped element 316, or portion, an angle which is less than 180° and which is in any case greater than 90°.

More specifically, the lower rod-shaped element 316, or portion, and the upper rod-shaped element 317, or portion, are one on the extension of the other, having respective generally cylindrical shapes, and preferably having substantially the same diameter.

In particular, as mentioned, the lower portion 316 of the supporting means 312, or handle, comprises two corresponding flaps 316a and 316b, which extend transverse relative to the corresponding rod-shaped central body, in particular being angularly spaced from each other by an angle between 5° and 90°, and preferably equal, or substantially equal, to 50°.

Advantageously, relative to the lower end, or free, portion 316 of the supporting means 312, or handle, the flaps 316a and 316b form an inner gripping surface 316i and an outer gripping surface 316e for at least two, and preferably for three, fingers of the user, that is to say, in particular for the thumb, for the forefinger and/or for the ring finger of the corresponding hand of the user.

The transversal end surface 316' of the supporting means 312, or handle, is defined by a plurality of resting faces, especially three in number, which are separate from one another and which are at the front parts of the flaps and of the rod-shaped supporting portion.

The flaps 316a and 316b have a respective peripheral longitudinal surface 316i (inner), 316e (outer), which is shaped in such a way as to form means for mutual stacking, or lateral superposing, with the supporting means 312, or handle, of similar cleaning tools 300 (as may be well inferred from Figure 17).

Advantageously, the supporting means 312, or handle, have a cross section such that it extends, from a middle, or solid, zone 312m thereof, diverging towards corresponding opposite lateral edges 316a', 316b'. Advantageously, between the opposite lateral edges 316a' and 316b', on the end, or lower, surface 316', there is a distance D'" which may vary from 6 mm to 35 mm, and preferably from 10 mm to 24 mm, and optimally, may be of 16 to 17 mm.

More specifically, as illustrated, the supporting means 312, or handle, have a respective end portion 317, from which the engaging and cleaning means of the corresponding part of the oral cavity of the person extend. More specifically, as illustrated, the end portion 317 is at the end opposite to the lower end, or free, portion 316.

Advantageously, the distance F" between the limit of the end portion 317, and the end, or lower, surface 316' may vary from 20 mm to 80 mm, preferably from 25 mm to 50 mm, and optimally, may vary from 30 mm to 35 mm.

Advantageously, the distance E‴ between the middle zone 312m, or solid point, and the opposite lateral edges 316a' and 316b' may vary from 6 mm to 40 mm, preferably from 10 mm to 30 mm, and optimally, from 20 mm to 25 mm.

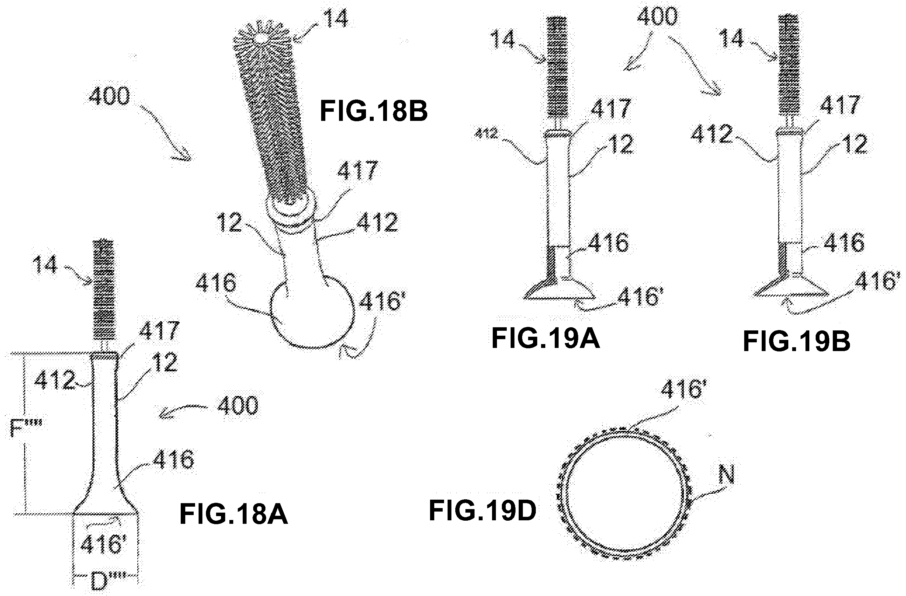

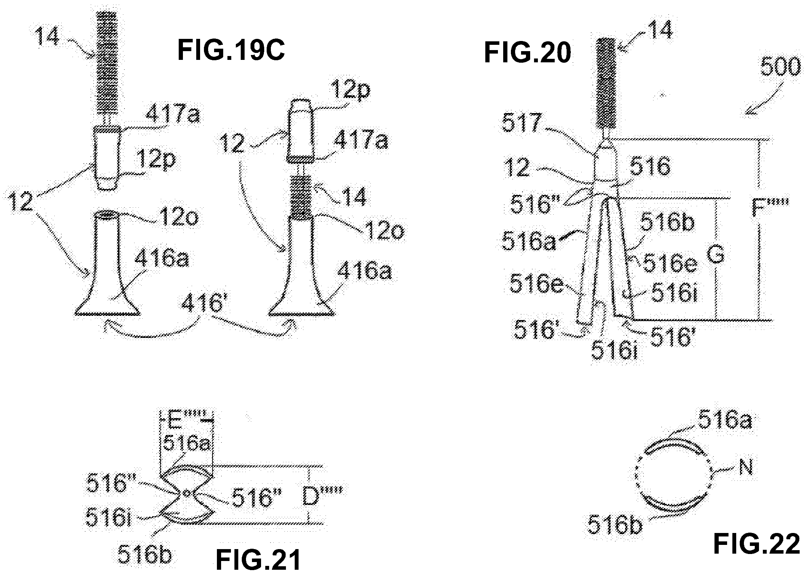

Figures 18A, 18B, 19A, 19B and 19C illustrate a fifth preferred embodiment of the tool 400, which is not part of the invention.

Advantageously, in conformity with the fifth preferred embodiment of the tool 400, illustrated in Figures 18A, 18B, 19A, 19B and 19C, the supporting body of the tool comprises supporting means 412, or handle, which have a main rod portion which extends along a straight line and which extends wide at the bottom, defining a corresponding end portion 416 of the supporting means 412, or handle, which has a corresponding lower resting transversal end surface 416', which is circular, or substantially circular.

More specifically, as illustrated, the supporting means 412, or handle, have a respective end portion 417, from which the engaging and cleaning means of the corresponding part of the oral cavity of the person extend. More specifically, as illustrated, the end portion 417 is at an end opposite to the lower end, or free, portion 416.

In particular, the lower end, or free, portion 416 of the supporting means 412, or handle, is formed as an extension of the supporting means 412, or handle, which extends with conical-shaped surface, which is open in the direction of the corresponding transversal end surface 416', which defines means for resting the tool on a corresponding supporting surface.

More specifically, as illustrated, the transversal end surface 416' of the supporting means 412, or handle, is in the form of a flat surface, in particular designed to form a lower rest for the tool, and has a closed curved profile, in particular as referred O-shaped, or generally circular-shaped.

Advantageously, the distance F"" between the limit of the end portion 417 and the end, or lower, surface 416' may vary from 20 mm to 80 mm, preferably from 25 mm to 50 mm, and optimally, from 30 mm to 35 mm.

In turn, the diameter '"D‴' " of this end, or lower, surface 416', may vary from 5 mm to 30 mm, preferably from 7 mm to 20 mm, and optimally, from 10 mm to 15 mm.

Preferably, the diameter of the linear rod 412 may vary from 4 mm to 8 mm.

More specifically, Figures 19A and 19B illustrate a variant of the fifth preferred embodiment of the tool 400. In this variant, advantageously, the end portion 416 (in particular, lower in the rest condition) of the supporting means, or handle, 412 has a corresponding transversal end surface 416' in the form of an empty cup for the purpose of providing a suction cup.

In particular, Figure 19C shows a second variant of the fifth preferred embodiment of the tool 400. Advantageously, in the second variant, the main body 12 is in the middle zone, which can be separated (divided) into the two, separate, parts 416a (in particular, lower in the rest condition) and 417a (in particular, upper in the rest condition).

Advantageously, the end portion 416a, which can be disengaged from the part 417a, is in the section (part) of joint 12o, which is hollow therein and has an inlet opening designed to house the engaging and cleaning means 14, in particular when the tool is in non operative or non use condition. Advantageously, therefore, the end portion 416a defines protective means for the engaging and cleaning means 14, and in rest conditions, for resting and keeping the tool in an upright, or substantially upright, condition relative to a corresponding preferably flat supporting surface. Advantageously, the part 416a has a corresponding transversal end surface 416' defining resting means for the tool on a corresponding supporting surface, which in its entirety defines closing means and supporting means for the engaging and cleaning means 14, when not used, or put away.

Advantageously, the end portion 416a could also be used as a simple covering and resting means for each of the embodiments of the tools 10, 200, 300, 400, and 500 illustrated, as for any further other possible embodiment.

In this way, it is possible to keep the tool 10, 200, 300, 400, and 500, when not used, in an appropriate position and to prevent the cleaning element from coming in contact with undesired surfaces and therefore running the risk of getting dirty or being contaminated, and also of preventing possible rolling, or falls, of the tool relative to the resting surface.

Advantageously, the hollow section 12o is designed to house the solid section (part) 12p of the end part 417a, with a snap-fit connection. As a whole, the user will have the ability to choose whether or not to use the engaging and cleaning means 14 by gripping the tool on the main body 12 or only the end part 417a.

Figures 20 and 21 illustrate a sixth preferred embodiment of the tool 500. Advantageously, in conformity with this sixth preferred embodiment of the tool 500 which is not part of the present invention, the main portion 12, or body, which defines the handle is defined by an end portion 517 (in particular, upper in the rest condition) and an end portion 516 (in particular, lower in the rest condition), which has a corresponding transversal end surface 516'.

More specifically, as illustrated, the main body 12 has a respective end portion 517 from which the engaging and cleaning means of the corresponding part of the oral cavity of the person extend. More specifically, as illustrated, the end portion 517 is at an end opposite to the lower end, or free, portion 516. The lower end, or free, portion 516 has a corresponding transversal end surface 516' (Figures 20 and 21) defining resting means for the tool on a corresponding supporting surface.

Relative to the main body 12, the transversal end surface 516' is defined by a plurality of faces, preferably, two in number, and is especially defined by corresponding flaps, in particular by two flaps 516a and 516b, as illustrated.

Advantageously, relative to the corresponding main body 12, the flaps 516a and 516b are separate from each other, defining a general shape, or fork, of inverted V or U, starting from the point of reciprocal joining 516" and extending diverging with a reciprocal angular distance comprised preferably between 5° and 40°, in the direction of the transversal end surface 516'.

Advantageously, relative to the main body 12, the flaps 516a and 516b form an inner gripping surface 516i and an outer gripping surface 516e for at least two, and preferably for three, fingers of the user, that is to say, in particular for the thumb, for the forefinger and/or for the ring finger of the corresponding hand of the user.

Advantageously, the distance Fʺ‴ between the limit of the end portion 517 and the end, or lower, surface 516' may vary from 20 mm to 90 mm, preferably from 25 mm to 50 mm, and optimally, from 30 mm to 35 mm. Advantageously, the distance G' between the fork point 516" and the end, or lower, surface 516' may vary from 10 mm to 65 mm, and preferably from 15 mm to 25 mm.

More specifically, Figure 21 below illustrates a bottom plan view of the sixth preferred embodiment of the tool 500. Advantageously, the distance Eʺ‴ between the lateral edges of the flaps respectively 516a and 516b may vary from 5 mm to 30 mm, preferably from 7 mm to 15 mm, and optimally, may be in any case around 10 to 12 mm.

As a whole, with respect to the surface of the end, or lower, surface 516', the distance Dʺ‴ between the flap 516a and the flap 516b may vary from 5 mm to 30 mm, and preferably from 7 mm to 20 mm, and optimally, may vary from 10 mm to 15 mm.

Advantageously, the tool may be of the disposable type, or differently have respective engaging and cleaning means 14, 113 which are interchangeable.

The respective supporting handle 12, 112, 212, 312, 412, 512 may be made of one-component plastic material and/or biodegradable one-component plastic material.

The respective supporting handle 12, 112, 212, 312, 412, 512 may also be made of rubbery one-component material and/or rubbery biodegradable one-component material.

The respective supporting handle 12, 112, 212, 312, 412, 512 may further be made of bi-component plastic and rubbery material.

The respective supporting handle 12, 112, 212, 312, 412, 512 may again be made of flexible material and/or rigid material.

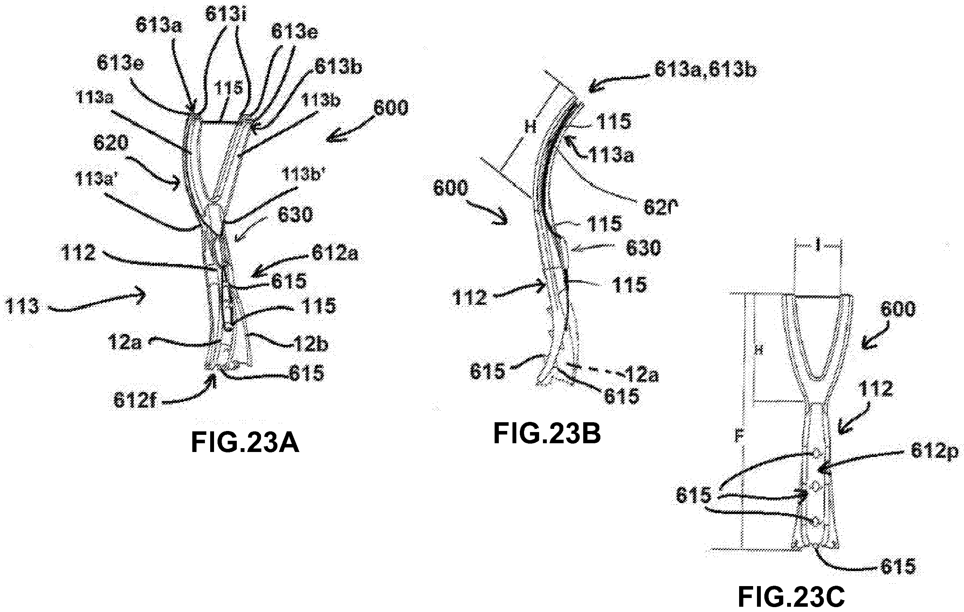

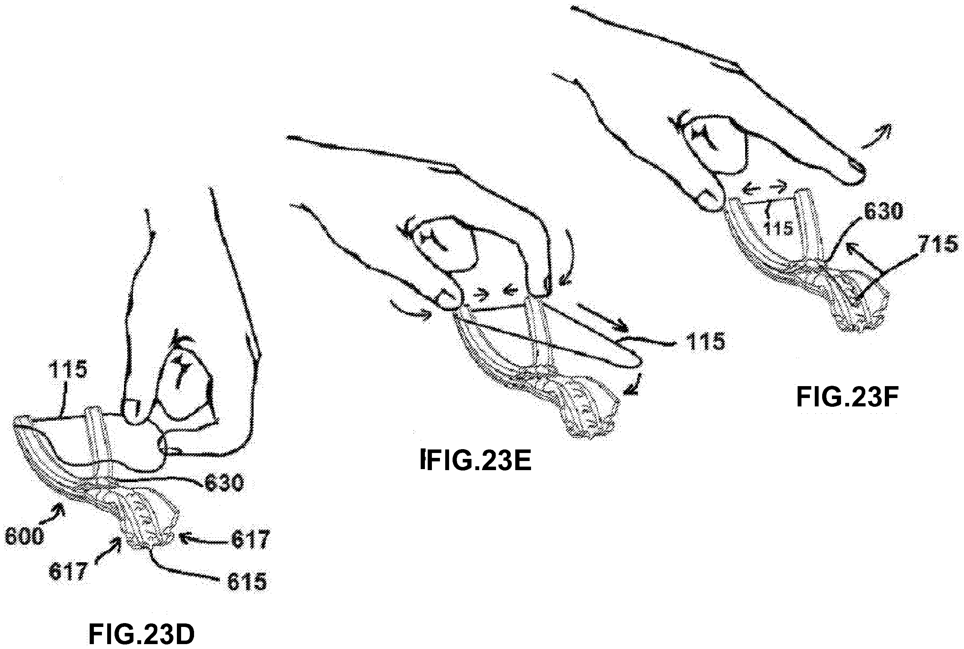

Figures 23A to 25B illustrate a seventh preferred embodiment of the tool 600 according to the present invention, that is similar to the second preferred embodiment of the tool 100, it also provided for supporting dental floss. In the seventh preferred embodiment, the components that are similar or equivalent to those of the second embodiment 100, or also of other preceding preferred embodiments, are denoted by the same reference numerals used in the corresponding preceding preferred embodiment and will not be commented in detail again so as to avoid making this description too lengthy.

In the seventh preferred embodiment, advantageously there are provided means for engageable and disengageable securing of dental floss 115 on the supporting means 112, or body, of the tool 600, in particular in operating condition and/or especially mounted on the arms 113a, 113b of the fork 113 of the tool 600.

Advantageously moreover, as may be inferred from the drawings, the dental floss to be applied on the supporting means 112, or body, of the tool 600, is in the form of a closed-loop dental floss 115, and which preferably is made of non-elastically extensible, or extendable, material. In other words, the dental floss 115 is preferably a floss which, if subjected to pulling action, does not extend, or if it does extend, does not return elastically to the starting configuration.

In this way, the application of the dental floss on the tool and/or the removal of it from the tool are greatly facilitated.

Advantageously, as may be inferred from the drawings, the means for engageable and disengageable securing of dental floss 115 comprise corresponding first and second seats 613a, 613b for receiving a corresponding portion of dental floss 115, in particular between which seats the dental floss 115 intended to perform the cleaning extends, it especially being tensioned.

As illustrated, each seat 613a, 613b is provided at a respective arm 113a, 113b of the fork 113 of the tool, in particular at the free end of the corresponding arm 113a, 113b of the fork 113.

Advantageously, as may be inferred in particular from Figures 23D to 23F, the arms 113a, 113b of the fork 113 can be neared to each other to allow the positioning of the dental floss on the fork, in particular in the respective seats 613a, 613b at, in particular defined by, the arms 113a, 113b of the fork 113, and can be moved away from each other to lock the floss in position on the fork 113, that is in the respective seats 613a, 613b at, or defined by, the arms 113a, 113b of the fork 113.

Advantageously, as may be inferred from Figures 23D to 23F, the arms 113a, 113b of the fork 113 of the tool are flexible, that is they can be elastically neared to and moved away from each other to allow the positioning of the dental floss on the fork, in particular in the respective seats 613a, 613b at, in particular defined by, the arms 113a, 113b of the fork 113.

More specifically, as may be inferred from the drawings, the seats 613a, 613b between which the dental floss 115 extends are aligned, or substantially aligned, with each other, along a respective direction, in particular along a transverse direction.

Advantageously, as may be inferred from the drawings, the seats between which the dental floss 115 extends are each defined by a corresponding recess 613a, 613b, which is provided in the body which defines the respective arm 113a, 113b of the fork 113.

More specifically, as may be inferred from the drawings, the respective seat 613a, 613b, or recess, is open peripherally, in particular at the respective lateral edge of the respective arm 113a, 113b which faces on the inner side 613i, that is to say, on the side which faces towards the other arm 113a, 113b of the fork 113, to allow the passage of the floss towards the other arm of the fork 113.

Advantageously, as may be inferred from the drawings, the respective seat 613a, 613b, or recess, is open peripherally, in particular at the respective outer side 613e side which is opposite to the inner side 613i of the respective arm which faces the other arm 113a, 113b of the fork 113 to allow the dental floss 115 to come out of the seat 613a, 613b, or recess.

Advantageously, as may be inferred from the drawings, the securing means of the dental floss 115 also comprise securing means 615 for a corresponding portion, in particular end portion in use, of the dental floss 115.

Advantageously, as may be inferred from the drawings, the securing means for a corresponding portion of the dental floss 115 comprise at least one engaging element 615 for a portion, in particular end portion in use, of the dental floss 115.

Advantageously, there are a plurality of engaging elements 615 for a portion, in particular an end portion in use, of the dental floss 115, in particular to form securing means for dental floss 115 of different extension or length.

As may be inferred from the drawings, the plurality of engaging elements 615 for a portion, in particular an end portion in use, of the dental floss 115 are longitudinally spaced apart from one another along the supporting portion 112, or handle, of the tool.

Advantageously, as may be inferred from the drawings, the respective engaging element 615 for a portion, in particular an end portion in use, of the dental floss 115 is centrally positioned with respect to the supporting portion 112, or handle, of the tool.

Advantageously, as may be inferred from the drawings, the respective engaging element for a portion, in particular an end portion in use, of the dental floss 115 is in the form of a pin 615, or protuberance, that projects with respect to the surface of the supporting portion 112, or handle, of the tool.

More specifically, the pin 615, or protuberance, is designed to form a hook for inserting and retaining a corresponding portion of the dental floss 115.

Advantageously, as may be inferred from the drawings, the securing means 615 for a corresponding end of the dental floss 115 are provided on the front face 612a and/or on the rear face 612p and/or on the bottom, or lower end, face 612f of the supporting portion 112, or handle, of the tool.

More specifically, there are provided a plurality of engaging elements 615 on the front face 612a and/or on the rear face 612p of the supporting portion 112, or handle, of the tool.

Advantageously, as may be inferred from Figures 23A to 23F, there are provided, on the supporting portion 112, or handle, of the tool, groove means 617, 617 for the passage of the dental floss 115 between the front face 612a and the rear face 612p of the supporting portion 112, or handle, of the tool.

Advantageously, as may be inferred in particular from Figure 23A, the groove means which are provided at the bottom 612f of the supporting portion 112, or handle, of the tool, comprise a first and a second slit 617, 617, which are recessed with respect to the bottom surface 612f of the supporting portion 112, or handle, of the tool, which slits 617, 617 are transversely spaced apart from each other, and in particular between which slits 617, 617 there extends the securing pin 615, or protuberance, for the dental floss 115 which is provided at the bottom 612f of the supporting portion 112, or handle, of the tool.

Advantageously, as may be inferred from the drawings, there are provided means 620 for guiding the dental floss 115, in particular along the supporting means 112 of the tool.

Advantageously, as may be inferred from the drawings, the guiding means for the dental floss comprise corresponding channel means 620, 620 for receiving or housing at least one corresponding branch of the dental floss 115.

Advantageously, as may be inferred from drawings, the guiding, or channel, means 620, 620 for receiving at least one branch of the dental floss 115 extend on the arms 113a, 113b of the fork 113, in particular along the outer side of the respective arm 113a, 113b of the fork 113.

Advantageously, as may be inferred from the drawings, the guiding, or channel, means for receiving or housing at least one corresponding branch of the dental floss 115 comprise at least one respective groove 620, 620 provided in the body of the tool, in particular in the body of the respective arm 113a, 113b of the fork 113.

Advantageously, as may be inferred from the drawings, the channel, or respective groove, means 620 on the respective arm 113a, 113b of the fork 113 extend from the free end at the respective seat 613a, 613b for receiving the dental floss 115.

Advantageously, as may be inferred from the drawings, the channel, or respective groove means 620 on the respective arm 113a, 113b of the fork 113 extend up to the base of the respective arm 113a, 113b, that is to say, up to the point of connection of the respective arm 113a, 113b to the portion 112 defining the handle of the tool.

More specifically, as may be inferred from the drawings, the respective channel or groove 620 on the respective arm 113a, 113b of the fork 113 is defined by a bottom face and opposite lateral faces which extend from the bottom face, and is open on the side opposite to the bottom face, that is to say, on the side at the outer surface of the respective arm 113a, 113b of the fork 113.

Advantageously, as may be inferred from the drawings, the guiding means of the dental floss 115 comprise means 630 for nearing opposite branches of the dental floss 115, that is to say, branches coming from opposite sides, or arms 113a, 113b, of the fork 113.

In this way, securing the end of the dental floss to the corresponding engaging element or pin 615 is facilitated.

Advantageously, as may be inferred from the drawings, the means 630 for nearing opposite branches of the dental floss 115, that is to say, branches coming from opposite sides, or arms 113a, 113b, of the fork 113 are provided on the front face 612a of the supporting portion 112, or handle, of the tool and/or as may be inferred from the successive drawings 26A and 26B relative to an eighth preferred embodiment of the tool 700, moreover similar to the seventh preferred embodiment 600, they are provided on the rear face 612p of the supporting portion 112, or handle, of the tool.

The eighth preferred embodiment of the tool 700 according to the present invention has most of the components that are similar or equivalent to those of the seventh preferred embodiment 600, and therefore they are denoted by the same reference numerals used in the corresponding seventh preferred embodiment and will not be commented in detail again so as to avoid making this description too lengthy.

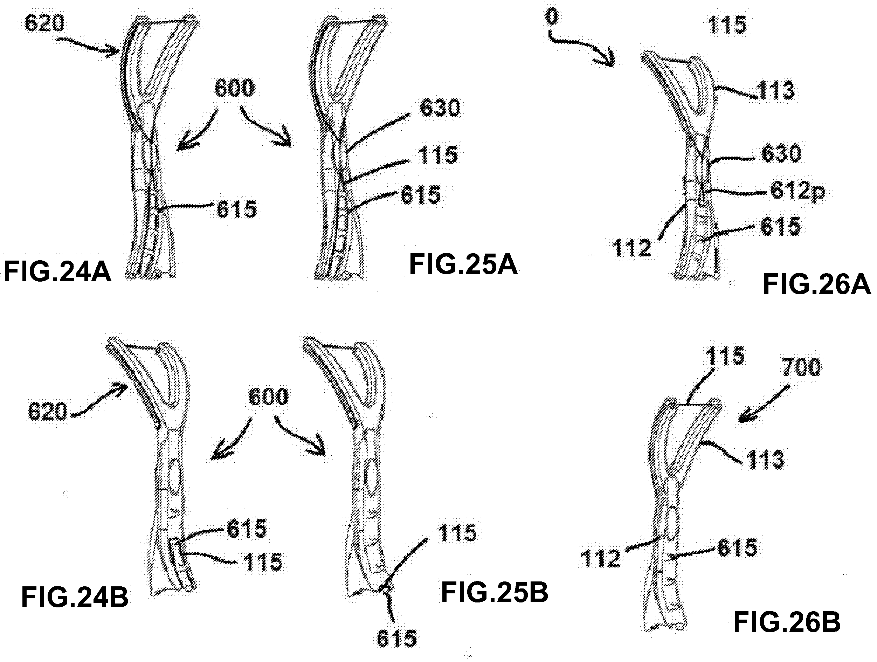

This eighth preferred embodiment differs from the seventh preferred embodiment, as may be inferred from Figures 26A and 26B, in that the fork 113 extends on the opposite side of the supporting portion 112, or handle, of the tool with respect to the one from which it extends in the seventh preferred embodiment 600.

Advantageously, as may be inferred from the drawings relative to the seventh preferred embodiment 600, the means 630 for nearing opposite branches of the dental floss 115, that is to say, branches coming from opposite sides, or arms 113a, 113, of the fork 113, are provided above the securing means 615 of the dental floss 115.

Advantageously, as may be inferred from the drawings relative to the seventh preferred embodiment 600, the means 630 for nearing opposite branches of the dental floss 115, that is to say, branches coming from opposite sides, or arms 113a, 113, of the fork 113, are provided downstream of, or below, channel receiving means 620, 620 for at least one branch of the dental floss 115 which extend on the arms 113a, 113b of the fork 113.

Advantageously, as may be inferred from the drawings relative to the seventh preferred embodiment 600, the means for nearing opposite branches of the dental floss 115, that is to say, branches coming from opposite sides, or arms 113a, 113, of the fork 113, are defined by a longitudinal insertion slit 630 for the opposite branches of the dental floss 115, which extends on the supporting portion 112, or handle, of the tool.

Advantageously, as may be inferred from the drawings relative to the seventh preferred embodiment 600, the means for nearing opposite branches of the dental floss 115, that is to say, branches coming from opposite sides, or arms 113a, 113, of the fork 113, are defined by a portion which extends protruding relative to the corresponding face of the supporting portion 112, or handle, of the tool and which defines a longitudinal insertion slit 630 for the opposite branches of the dental floss 115.

More specifically, as may be inferred from the drawings, the longitudinal indentation and nearing slit 630 for the opposite branches of the dental floss 115 is defined by a bottom face and opposite lateral faces which extend from the bottom face, and is open on the side opposite to the one of the bottom face.

Advantageously, as may be inferred from the drawings relative to the seventh preferred embodiment 600, the arms 113a, 113b of the fork 113 of the tool have a height H which may vary from 15 mm to 45 mm and which is preferably around 30 mm.

Advantageously, as may be inferred from the drawings relative to the seventh preferred embodiment 600, the arms 113a, 113b of the fork 113 of the tool are spaced apart from each other by a distance I, which is preferably around 20 to 25 mm, and which in any case, in an optimum manner, is equal, or substantially equal, to 20 mm.

Advantageously, as may be inferred from the drawings relative to the seventh preferred embodiment 600, the overall height F of the tool may vary from 65 mm to 95 mm and is preferably around 80 mm.

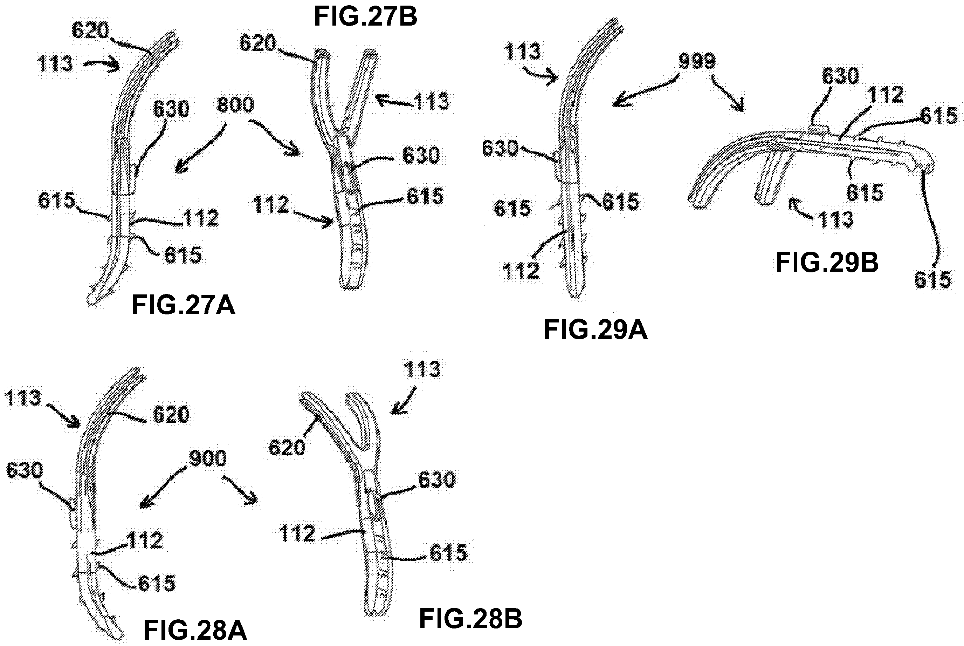

Figures 27A and 27B illustrate a ninth preferred embodiment of the tool 800 which is not part of the present invention. In this ninth preferred embodiment 800, the components which are similar or equivalent to those of the seventh preferred embodiment 600 are denoted by the same reference numerals used in the preceding seventh preferred embodiment and will not be commented in detail again so as to avoid making this description too lengthy.

In practice, this ninth preferred embodiment of the tool 800 differs from the seventh preferred embodiment 600 in that the respective portion defining the handle 112 is not shaped such as to be able to stay in an upright position in the rest condition, it not having the lateral flaps 12a and 12b which instead are present on the supporting portion 112, or handle, of the seventh preferred embodiment 600.

Figures 28A and 28B illustrate a tenth preferred embodiment of the tool 900 which is not part of the present invention. In this ninth preferred embodiment 900, the components which are similar or equivalent to those of the eighth preferred embodiment 700 are denoted by the same reference numerals used in the preceding eighth preferred embodiment and will not be commented in detail again so as to avoid making this description too lengthy.

In practice, this tenth preferred embodiment of the tool 900 differs from the eighth preferred embodiment 700 in that the respective portion defining the handle 112 is not shaped such as to be able to stay in an upright position in the rest condition, it also not having the lateral flaps which instead are present on the supporting portion 112, or handle, of the seventh preferred embodiment 600.

Furthermore, unlike the ninth preferred embodiment 800, in the tenth preferred embodiment 900, the end part of the portion 112 defining the supporting handle is facing the same direction as the fork 113, whilst in the ninth preferred embodiment 800, the end part of the portion 112 defining the supporting handle is facing in the direction opposite to the one in which the fork 113 is facing.

Figures 29A and 29B below illustrate an eleventh preferred embodiment of the tool 999 which is not part of the present invention, which is similar to the preceding eighth and ninth preferred embodiments 800 and 900.

In practice, this eleventh preferred embodiment of the tool 999 differs from the preceding eighth and ninth preferred embodiments 800 and 900 in that the respective portion defining the handle 112, that is to say, the end portion thereof, is shaped straight rather than curved, as instead is provided in the eighth and ninth preferred embodiments 800 and 900.

Moreover, as may be inferred from the drawings, in the respective embodiment, the arms of the fork are curved towards the front part of the tool, that is to say, they face the concavity towards the front part of the tool.

Advantageously, according to a further preferred embodiment, however not illustrated in the accompanying drawings, it is also imaginable that the means for securing the dental floss 115 comprise a respective securing element of the dental floss 115, which securing element is supported by the supporting means of the tool, and preferably by the portion defining the handle of the tool, which is movable, preferably in a snap-on fashion, between a position for receiving the corresponding portion of dental floss 115 and a retaining position, in particular drawn or tensioned, of the dental floss 115, and vice versa, for releasing the dental floss 115 once used.

It is understood that the supporting means, or handle, of the respective drawings described are each mutually adaptable with any of the engaging and cleaning means described, in the form of a corresponding brush, preferably a dental brush, or in the form of a pick or toothpicks, or in the form of corresponding dental floss.

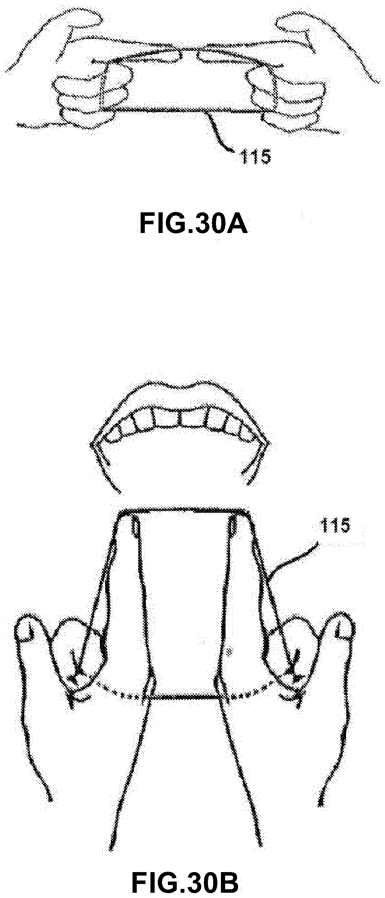

Advantageously, according to a further aspect, as may be inferred from Figures 30A and 30B below, dental floss 115 is also provided, in particular which can be used for cleaning a corresponding part of the oral cavity of a person, in particular for cleaning the teeth, preferably of a person, which dental floss 115 is configured, or shaped, like a closed loop, and preferably is a material which is not elastically extensible.

In practice, the closed-loop dental floss 115 is designed to be applied to a corresponding supporting tool, as detailed above, and is also designed to be used in a separate manner from this tool, that is to say, it is designed to be gripped directly and easily by the user to clean the oral cavity, in particular the teeth of the user, as is apparent from Figures 30A and 30B.

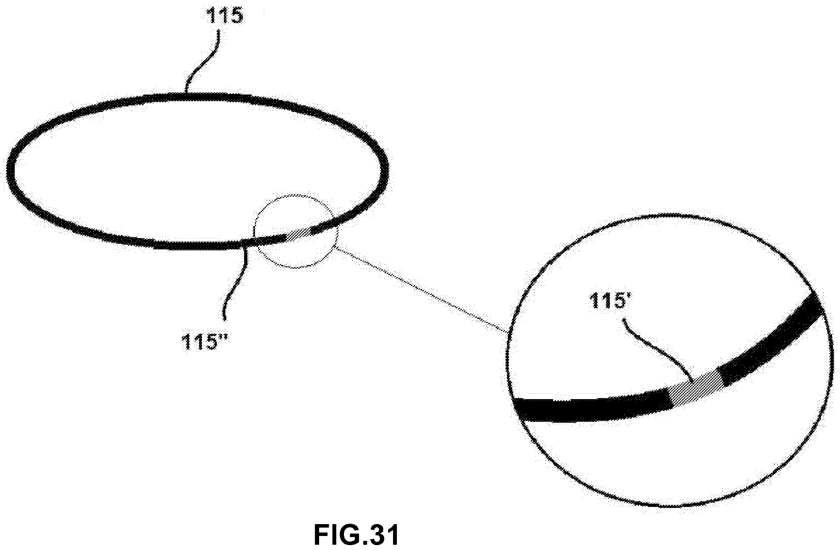

Advantageously, as may be inferred in particular from Figure 31 relative to a second preferred embodiment of the dental floss 115, means 115' for marking at least one zone of the dental floss 115 are provided.

In this way, it is possible to identify one or more zones of the dental floss, and in particular identify the zone with which the cleaning is performed. Therefore, it is possible to modify, in a reliable manner, the zone in use of the dental floss and in other terms, to work along the entire perimeter extension of the dental floss, thus achieving more accurate cleaning, that is to say, suitably using the dental floss several times, with subsequent reduced economical and environmental waste.

Advantageously, as may be inferred in particular from Figure 31 relative to the second preferred embodiment of the dental floss 115, the marking means of at least one zone of the dental floss 115 are defined by a respective zone 115' which has a different surface colour with respect to the zone of the dental floss 115 which is adjacent thereto, that is to say, relative to the remaining part 115" of the dental floss 115. Advantageously, the closed-loop dental floss 115 has a perimeter extension, or length, which may vary from 5 cm to 50 cm, and preferably from 14 cm to 25 cm.

More specifically, for an adult, it is provided for the dental floss 115 to have a perimeter extension, or length, which may vary from 18 cm to 25 cm, and preferably from 20 cm to 22 cm.

More specifically, for a child, it is provided for the dental floss 115 to have a perimeter extension, or length, which may vary from 14 cm to 20 cm, and preferably from 16 cm to 18 cm.

With this dental floss, it is possible to handle the dental floss 115 with extreme effectiveness to clean the oral cavity, and also to save time because the cutting operation of the dental floss from the spool is prevented, as occurs instead for known dental floss.

The dental floss 115 may be of any type of nylon by-product or of another material suitable for the purpose.

The dental floss 115 may also be of the waxed or non-waxed type, of the spongey or non-spongey type and/or of the biodegradable or non-biodegradable type.

The dental floss 115 may also be completely coloured. Conveniently, there may be provided different colours suitable for marking, or provided for, dental floss which has a different cross-section diameter from one another. Moreover, the dental floss 115 may be soaked in substances useful for preventing cavities and gingivitis.

The invention described above is susceptible of industrial application. The scope of the invention is defined by the claims.

## Claims

1. A tool (10) for cleaning a corresponding part of the oral cavity of a person, in particular for cleaning teeth of a person, comprising means (14), or member, for engaging and cleaning the corresponding part of the oral cavity of the person, and supporting means (12) for supporting said means (14), or member, for engaging and cleaning the corresponding part of the oral cavity of the person, which supporting means (12) define, or comprise, a respective portion which defines the handle of the tool; said engaging and cleaning means (14) extending from the supporting means (12) and in particular, being in the form of a corresponding brush, preferably a dental brush (14) or in the form of a pick or toothpick, or in the form of corresponding dental floss;
the supporting means (12) is in the form of a longitudinally elongate body, which extends between
a first end (12'), upper in the rest condition, and from which the engaging and cleaning means (14) extend, and
a second end (12"), lower in the rest condition; the elongate body (12) having
a large longitudinal face facing frontally (12i),
a large longitudinal face facing posteriorly (12e) and
opposite longitudinal lateral edges (12a, 12b) for connecting the face facing frontally (12i) and the face facing posteriorly (12e) of the elongate body (12);
wherein said elongated body has a curved cross section in the general shape of a 'U' providing a transversal end surface (16') of the supporting means (12) in the form of a flat surface in the general curved shape of a 'U' and, designed to form a corresponding lower rest for the tool (10) that defines corresponding resting means and means for keeping the tool in an upright condition relative to a corresponding flat supporting surface;
and said cross section tapers away from the second end (12"), and converges towards the first end (12')
wherein said body has a respective thickness which extends between said large longitudinal face facing frontally (12i) which is an inner recessed surface (12i) and said large longitudinal face facing posteriorly (12e) which is an outer protruding surface (12e), such that the inner recessed surface (12i) is designed to overlap, in particular at least partly, the outer protruding surface (12e) of the supporting means (12) of at least one similar cleaning tool (10), so as to form means for mutual stacking by lateral superposing with the supporting means (12) of similar cleaning tools (10);
and
wherein free end portion (16) of the elongated body is shaped to form gripping means for the fingers of the user to perform the cleaning of the corresponding part of the oral cavity, which gripping means are formed of a peripheral gripping surface of the large longitudinal faces facing frontally and posteriorly (12i, 12e) for at least two, and preferably for three, fingers of the user.

2. The tool according to claim 1, **characterised in that** the supporting means (12) have a cross section such that starting from a middle zone (12m) thereof, they extend diverging towards corresponding opposite lateral edges (12a, 12b).

3. The tool according to any of the foregoing claims, **characterised in that** the elongate body (12) defining the supporting means (12) has a cross section such as to define a variable thickness (5), preferably in an increasing manner, starting from the lateral edges (12a, 12b) towards the middle zone (12m) of the elongate body (12).

4. The tool to any of the foregoing claims, **characterised in that** the inner recessed surface (12i) forms housing means for gripping by the user, said housing means extending longitudinally along the free end portion (16), that is to say, along the supporting means (12).

5. The tool according to any of the foregoing claims, **characterised in that** the the inner recessed surface (12i) extends so as to receive the engagement or rest of one or two fingers of the user.

6. The tool according to any of the foregoing claims, **characterised in that** the first end (12') forms an end portion (17), from which the engaging and cleaning means of the corresponding part of the oral cavity of the person extends.

7. The tool according to claim 6 **characterised in that** the end portion (17) from which the engaging and cleaning means of the corresponding part of the oral cavity extends is an end opposite to the free end portion (16).

8. The tool according to any of the foregoing claims 6 and 7 **characterised in that** a shaft (13) for supporting the engaging and cleaning means (14) extends from the transversal end face of the end portion (17), and **in that** the brush, in particular the dental brush, has cleaning bristles (15), in particular which are circumferentially and/or longitudinally distributed, in particular relative to the respective supporting shaft (13).

9. The tool according to any of the foregoing claims, **characterised in that** the opposite lateral edges (12a and 12b) of the supporting means (12) have, on the respective end surface (16'), a distance (D) which varies from 6 mm to 35 mm, preferably from 10 mm to 24 mm, and optimally, substantially is equal to 15 to 17 mm.

10. The tool according to claim 2, **characterised in that** the distance (E) between the middle zone (12m) and the surface defined by the joining line (L) of the opposite lateral edges (12a and 12b) varies from 6 mm to 35 mm, preferably from 10 mm to 24 mm, and optimally, from 16 mm to 19 mm.

11. The tool according to claim 6, **characterised in that** the distance (F) between the end portion (17) and the end surface (16') varies from 20 mm to 90 mm, preferably from 30 mm to 70 mm, and optimally, from 40 to 45 mm.

## Patentansprüche

1. Werkzeug (10) zum Reinigen eines entsprechenden Teils der Mundhöhle einer Person, insbesondere zum Reinigen der Zähne einer Person, umfassend Mittel (14), oder Elemente, zum Koppeln und Reinigen des entsprechenden Teils der Mundhöhle der Person und Stützmittel (12) zum Stützen der Mittel (14), oder Elemente, zum Koppeln und Reinigen des entsprechenden Teils der Mundhöhle der Person, wobei die Stützmittel (12) einen jeweiligen Teil definieren oder umfassen, der den Griff des Werkzeugs; wobei die Kopplungs- und Reinigungsmittel (14) sich aus den Trägermitteln (12) erstrecken und insbesondere entweder die Form einer entsprechenden Bürste, vorzugsweise einer Zahnbürste (14), oder die Form eines Stäbchens oder eines Zahnstochers, oder die Form eines passende Zahnseide, aufweisen; wobei die Stützmittel (12) die Form eines längsgestreckten Körpers haben, der sich zwischen einem ersten Ende (12'), das im Ruhezustand oben liegt und von dem sich die Kopplungs- und Reinigungsmittel (14) erstrecken, und einem zweiten Ende (12") das im Ruhezustand unten liegt; wobei der längsgestreckte Körper (12) eine große nach vorne gerichtete Längsfläche (12i), eine große nach hinten gerichtete Längsfläche (12e) und gegenüberliegende Längsseitenkanten (12a, 12b) zum Verbinden der nach vorne gerichteten Fläche (12i), und die Rückseite (12e) des länglichen Körpers (12), aufweist; wobei der längsgestreckte Körper einen im Allgemeinen U-förmig gekrümmten Querschnitt aufweist, der eine quer verlaufende Endfläche (16') des Stützmittels (12), mit der Form einer flachen Oberfläche, die im Allgemeinen die gekrümmte Form eines *"*U*"* hat und wobei eine entsprechende untere Auflage für das Werkzeugs (10) vorgesehen ist, die entsprechende Auflagemittel und Mittel zum Halten des Werkzeugs in einer vertikalen Position in Bezug auf eine entsprechende Auflagefläche definiert; wobei sich der Querschnitt vom zweiten Ende (12") weg verjüngt und zum zweiten Ende (12") hin gegen das erste Ende (12') konvergiert, wobei der Körper eine entsprechende Dicke aufweist, in der sich die große nach vorne gerichtete Längsfläche (12i) entwickelt, die eine innere vertiefte Fläche (12i) ist, und die große nach hinten gerichtete Längsfläche (12e) eine vorstehende Außenfläche (12e) ist, wobei die innere vertiefte Fläche (12i) so ausgebildet ist, dass sie die äußere vorstehende Fläche (12e) des Haltemittels (12) mindestens eines gleichartigen Reinigungsgeräts (10), insbesondere zumindest teilweise überlappt, um Mittel zum gegenseitigen Stapeln durch seitliche Überlappung mit den Haltemitteln (12) gleichartiger Reinigungsgeräte (10) zu bilden; und wobei ein Teil des freien Endes (16) des länglichen Körpers die Form von Greifmitteln für die Finger des Benutzers aufweist, um eine Reinigung des entsprechenden Teils der Mundhöhle durchzuführen, wobei die Greifmittel durch einen peripheren Griffoberfläche der großen nach vorne und nach hinten Längsflächen (12i, 12e) für mindestens zwei, vorzugsweise für drei Finger des Benutzers.

2. Werkzeug nach Anspruch 1, **dadurch gekennzeichnet, dass** die Stützmittel (12) einen solchen Querschnitt aufweisen, dass sie sich ausgehend von einem zentralen Bereich (12m) desselben divergierend in Richtung der entsprechenden gegenüberliegenden Seitenkanten (12a, 12b) erstrecken.

3. Werkzeug nach einem der vorhergehenden Ansprüche, **dadurch gekennzeichnet, dass** der längliche Körper (12), der die Stützmittel (12) definiert, einen solchen Querschnitt aufweist, dass er ausgehend von den Seitenkanten (12a, 12b), eine variable Dicke (5), vorzugsweise zunehmend in Richtung des zentralen Bereichs (12m) des länglichen Körpers (12), definiert.

4. Werkzeug nach einem der vorhergehenden Ansprüche, **dadurch gekennzeichnet, dass** die vertiefte Innenfläche (12i) Aufnahmemittel zum Greifen durch den Benutzer bildet, wobei sich die Aufnahmemittel längs, entlang des freien endlichen Teils (16), d.h. entlang der Stützmittel (12), erstrecken.

5. Werkzeug nach einem der vorhergehenden Ansprüche, **dadurch gekennzeichnet, dass** die vertiefte Innenfläche (12i) sich derart erstreckt, dass sie die Kopplung oder die Unterstützung eines der beiden Finger des Benutzers aufnimmt.

6. Werkzeug nach einem der vorhergehenden Ansprüche, **dadurch gekennzeichnet, dass** das erste Ende (12') einen endlichen Teil (17) bildet, aus dem sich die Kopplungs- und Reinigungsmittel des entsprechenden Teils der Mundhöhle der Person entwickeln.

7. Werkzeug nach Anspruch 6, **dadurch gekennzeichnet, dass** der endliche Teil (17), aus dem die Kopplungs- und Reinigungsmittel des entsprechenden Teils der Mundhöhle erstrecken, ein Ende ist, das dem freien endlichen Teil (16) gegenüberliegt.

8. Werkzeug nach einem der vorhergehenden Ansprüche 6 und 7, **dadurch gekennzeichnet, dass** sich von der quer verlaufenden Endfläche des Endteils (17) ein Schaft (13) zur Halterung des Kopplungs- und Reinigungsmittels (14) erstreckt, und dass die Bürste, insbesondere die Zahnbürste, Reinigungsborsten (15) aufweist, die insbesondere in Umfangs- und/oder Längsrichtung, insbesondere bezogen auf den jeweiligen stützenden Schaft (13), verteilt angeordnet sind.

9. Werkzeug nach einem der vorhergehenden Ansprüche, **dadurch gekennzeichnet, dass** die gegenüberliegenden Seitenkanten (12a, 12b) der Stützmittel (12) zu der jeweiligen Stirnfläche (16') einen Abstand (D) aufweisen, der zwischen 6 mm und 35 mm, vorzugsweise zwischen 10 mm und 24 mm variiert, und optimal im Wesentlichen zwischen 15 und 17 mm liegt.

10. Werkzeug nach Anspruch 2, **dadurch gekennzeichnet, dass** der Abstand (E) zwischen der mittleren Bereich (12m) und der durch die Verbindungslinie (L) der gegenüberliegenden Seitenkanten (12a, 12b) definierten Oberfläche zwischen 6 mm und 35 mm, vorzugsweise zwischen 10 mm und 24 mm und optimal zwischen 16 mm und 19 mm, variiert.

11. Werkzeug nach Anspruch 6, **dadurch gekennzeichnet, dass** der Abstand (F) zwischen dem endlichen Teil (17) und der Endfläche (16') zwischen 20 mm und 90 mm, vorzugsweise zwischen 30 mm und 70 mm, und optimal zwischen 40 mm und 45 mm variiert.

## Revendications

1. Outil (10) pour nettoyer une partie correspondante de la cavité buccale d'une personne, en particulier pour nettoyer les dents d'une personne, comprenant des moyens (14), ou des éléments, pour coupler et nettoyer la partie correspondante de la cavité buccale de la personne, et des moyens de support (12) pour supporter les moyens (14), ou les éléments, pour coupler et nettoyer la partie correspondante de la cavité buccale de la personne, lesquels moyens de support (12) définissent, ou comprennent, une partie respective qui définit le manche de l'Outil; les moyens de couplage et de nettoyage (14) se développent à partir des moyens de support (12) et se présentent notamment sous la forme d'une brosse correspondante, de préférence une brosse à dents (14), ou sous la forme d'un bâton ou d'un cure-dent, ou sous la forme d'un fil dentaire correspondant ; les moyens de support (12) ont la forme d'un corps allongé longitudinal, qui s'étend entre une première extrémité (12'), supérieure à l'état de repos, et à partir de laquelle s'étendent les moyens de couplage et de nettoyage (14), et une deuxième extrémité (12"), inférieure à l'état de repos; dans lequel le corps allongé (12) a une grande surface longitudinale orientée vers l'avant (12i), une grande surface longitudinale orientée vers l'arrière (12e) et des bords latéraux longitudinaux opposés (12a, 12b) pour relier la surface orientée vers l'avant (12i) et la surface orientée vers l'arrière (12e) du corps allongé (12); dans lequel le corps allongé a une section transversale incurvée généralement en forme de "U" qui forme une surface d'extrémité transversale (16') des moyens de support (12) avec la forme d'une surface plane avec la forme généralement incurvée d'un "U" est destinée à former un appui inférieur correspondant pour l'Outil (10) qui définit des moyens d'appui correspondants et des moyens pour maintenir l'Outil dans une position verticale par rapport à une surface de support plaine correspondante; dans lequel la section transversale se rétrécit à partir de la deuxième extrémité (12") et converge vers la première extrémité (12'), dans laquelle le corps a une épaisseur respective dans laquelle se développe la grande surface longitudinale orientée vers l'avant (12i), qui est une surface évidée intérieure (12i) et la grande surface longitudinale orientée vers l'arrière (12e) qui est une surface extérieure saillante (12e), la surface évidée intérieure (12i) étant conçue pour recouvrir, en particulier au moins partiellement, la surface extérieure saillante (12e) du moyen de support (12) d'au moins un Outil de nettoyage similaire (10), de manière à former des moyens d'empilage mutuel par recouvrement latéral avec les moyens de support (12) d'Outils de nettoyage similaires (10); et dans lequel une partie de l'extrémité libre (16) du corps allongé a la forme de moyens de préhension pour les doigts de l'utilisateur afin d'effectuer le nettoyage de la partie correspondante de la cavité buccale, dans lequel les moyens de préhension sont formés par une surface périphérique de préhension des grandes surfaces longitudinales orientées vers l'avant et vers l'arrière (12i, 12e) pour au moins deux, et de préférence pour trois doigts de l'utilisateur.

2. Outil selon la revendication 1, **caractérisé en ce que** les moyens d'appui (12) ont une section transversale telle qu'à partir d'une zone intermédiaire (12m) de ceux-ci, ils se développent en s'écartant vers des bords latéraux opposés correspondants (12a, 12b).

3. Outil selon l'une quelconque des revendications précédentes, **caractérisé en ce que** le corps allongé (12) qui définit les moyens de support (12) a une section transversale telle qu'elle définit une épaisseur variable (S), de préférence de plus en plus, à partir des bords latéraux (12a, 12b), vers la zone centrale (12m) du corps allongé (12).

4. Outil selon l'une quelconque des revendications précédentes, **caractérisé en ce que** la surface interne évidée (12i) forme des moyens de logement pour la préhension par l'utilisateur, dans lequel les moyens de logement s'étendent longitudinalement le long de la partie d'extrémité libre (16), c'est-à-dire le long des moyens de support (12).

5. Outil selon l'une quelconque des revendications précédentes, **caractérisé en ce que** la surface intérieure évidée (12i) se développe pour recevoir l'accouplement ou l'appui d'un des deux doigts de l'utilisateur.

6. Outil selon l'une quelconque des revendications précédentes, **caractérisé en ce que** la première extrémité (12') forme une partie d'extrémité (17), à partir de laquelle se développent les moyens de couplage et de nettoyage de la partie correspondante de la cavité buccale de la personne.

7. Outil selon la revendication 6, **caractérisé en ce que** la partie d'extrémité (17) à partir de laquelle se développent les moyens de couplage et de nettoyage de la partie correspondante de la cavité buccale sont situés à une extrémité opposée à la partie d'extrémité libre (16).

8. Outil selon l'une quelconque des revendications précédentes 6 et 7, **caractérisé en ce qu'**une tige (13) de support des moyens de couplage et de nettoyage (14) s'étend depuis la surface d'extrémité transversale de la partie d'extrémité (17), et que la brosse, en particulier la brosse à dents, présente des poils de nettoyage (15), qui sont notamment répartis dans une direction circonférentielle et/ou longitudinale, en particulier par rapport à la tige de support relative (13).

9. Outil selon l'une quelconque des revendications précédentes, **caractérisé en ce que** les bords latéraux opposés (12a, 12b) des moyens de support (12) présentent sur la surface d'extrémité respective (16') une distance (D) qui varie entre 6 mm et 35 mm, de préférence entre 10 mm et 24 mm, et de manière optimale sensiblement entre 15 et 17 mm.

10. Outil selon la revendication 2, **caractérisé en ce que** la distance (E) entre la zone intermédiaire (12m) et la surface définie par la ligne de jonction (L) des bords latéraux opposés (12a, 12b) varie entre 6 mm et 35 mm, de préférence entre 10 mm et 24 mm, et de manière optimale entre 16 mm et 19 mm.

11. Outil selon la revendication 6, **caractérisé en ce que** la distance (F) entre la partie d'extrémité (17) et la surface d'extrémité (16') varie entre 20 mm et 90 mm, de préférence entre 30 mm et 70 mm, et de manière optimale entre 40 mm et 45 mm.
